(19) **Europäisches Patentamt**
**European Patent Office**
**Office européen des brevets**

(11) **EP 2 536 022 B1**

(12) **EUROPÄISCHE PATENTSCHRIFT**

(45) Veröffentlichungstag und Bekanntmachung des Hinweises auf die Patenterteilung:
**12.06.2019   Patentblatt 2019/24**

(51) Int Cl.:
**H02P 13/06** *(2006.01)*      **H01H 9/00** *(2006.01)*

(21) Anmeldenummer: **12163166.7**

(22) Anmeldetag: **04.04.2012**

(54) **Verfahren zur Überwachung eines Stufenschalters**

Method for monitoring a step switch

Procédé destiné à la surveillance d'un commutateur à gradins

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2011   DE 102011104887**

(43) Veröffentlichungstag der Anmeldung:
**19.12.2012   Patentblatt 2012/51**

(73) Patentinhaber: **Maschinenfabrik Reinhausen GmbH**
**93059 Regensburg (DE)**

(72) Erfinder: **Schmeckebier, Mario**
**93057 Regensburg (DE)**

(74) Vertreter: **Meier, Gerald Heinz**
**Maschinenfabrik Reinhausen GmbH**
**Falkensteinstrasse 8**
**93059 Regensburg (DE)**

(56) Entgegenhaltungen:
**DE-A1-102005 012 052      DE-A1-102009 051 923**
**DE-C1- 19 907 834**

**Beschreibung**

Die Erfindung betrifft ein Verfahren zur Überwachung eines Stufenschalters mittels Überwachung des Drehmomentverlaufes während der Umschaltung, d. h. der Betätigung des Stufenschalters.

DE 197 44 465 C1 beschreibt ein Verfahren zur Überwachung eines Stufenschalters. Bei diesem Verfahren werden während der Lastumschaltung, d. h. der Betätigung des Stufenschalters, die Effektivwerte von Strom und Spannung am Antriebsmotor des zugeordneten Motorantriebes gemessen; aus diesen Werten wird die Wirkleistung berechnet und daraus wiederum das Drehmoment ermittelt. Gleichzeitig erfolgt eine Positionserfassung der jeweils aktuellen Stellung des Stufenschalters während der Umschaltung. Anschließend erfolgt eine Synchronisation durch einen Synchronimpuls, der zu einem charakteristischen Zeitpunkt während der Lastumschaltung, der reproduzierbar ist, erzeugt wird. Mit Hilfe dieser Synchronisation wird der Drehmomentverlauf normiert und anschließend in für die Umschaltsequenz typische Zeitbereiche, sogenannte "Fenster", untergliedert, die bestimmten, schalterspezifischen Bereichen der Umschaltsequenz entsprechen. Anschließend erfolgt ein Vergleich der tatsächlichen ermittelten Drehmomentwerte der einzelnen Fenster mit vorab gespeicherten charakteristischen Sollwerten. Bei Überschreiten werden Warnungen ausgegeben oder auch der Transformator abgeschaltet. Diese Aufteilung des Drehmomentverlaufes in einzelne Fenster ist bereits aus DE 197 46 574 C1 bekannt.

DE 199 07 834 C1 bildet die Basis für den Oberbegriff des Anspruchs 1 und beschreibt ein weiter entwickeltes Verfahren dieser Art. Es ist dort ebenfalls beschrieben, dass das jeweilige aktuelle Drehmoment an der Antriebswelle auf indirektem Wege durch Messung der Wirkleistung, die der Antriebsmotor des Motorantriebes aufnimmt, ermittelt wird. Es werden mittels bekannter Messanordnungen, z. B. Strom- und Spannungswandler, Strom, Spannung und cosφ am Antriebsmotor gemessen und daraus die Wirkleistung Pw berechnet. In dieser Veröffentlichung ist auch kurz erwähnt, dass an Hand der jeweiligen spezifischen Motorkennlinie Md = f(Pw) das entsprechende Drehmoment Md berechnet werden kann. Wie dies geschehen soll, ist der Veröffentlichung nicht zu entnehmen.

Dieses Verfahren ist eine grundsätzlich elegante Möglichkeit zur Drehmomentüberwachung mittels indirekter Erfassung über die Wirkleistung und hat sich bewährt. Es ist jedoch in manchen Fällen ungenau. Da die Antriebsmotoren ein unterschiedliches Verhalten bei Über- und Unterspannung zeigen, ergeben sich Abbildungsfehler, die das ermittelte Motordrehmoment in seinem Wert verfälschen können.

DE 10 2005 012 052 A1 beschreibt ein Verfahren zum Ermitteln von Kenngrößen eines Generators eines Kraftfahrzeugs. Bei diesem bekannten Verfahren werden für einen Generator die Aufnahmeleistung aus dem Strom, der Spannung und cosφ bestimmt sowie das Drehmoment und der Wirkungsgrad berechnet. Dieses Dokument beschreibt außerdem, dass die Aufnahmeleistung der Abgabeleistung zuzüglich aller Verlustleistungen entspricht. Dieses Dokument beschreibt des Weiteren, dass die Kupferverluste dem Strom zum Quadrat proportional sind. Dieses Dokument beschreibt zudem, dass das Drehmoment entsprechend der Gleichung

$$M = P / (2\pi \cdot n)$$

berechnet werden kann, worin M das Drehmoment ist, P die Leistung ist, und n die Drehzahl des Generators ist.

DE 10 2009 051 923 A1 beschreibt ein Verfahren zum Berechnen einer elektrischen Leistungsaufnahme einer Industriemaschine. Dieses Dokument beschreibt den Zusammenhang zwischen den Vektorströmen zum Quadrat und der Leistung.

Vor diesem Hintergrund schlägt die Erfindung ein Verfahren gemäß Anspruch 1 vor. Die Unteransprüche betreffen vorteilhafte Weiterbildungen des erfindungsgemäßen Verfahrens.

Das vorgeschlagene Verfahren verbessert das bestehende Verfahren und ermöglicht eine möglichst genaue Ermittlung des Drehmoments und in der Folge des Drehmomentverlaufes bei der Umschaltung, d. h. der Betätigung des Stufenschalters.

Das erfindungsgemäße Verfahren geht von der allgemeinen Erkenntnis aus, dass bei einer Umschaltung des Stufenschalters die Spannung im Antriebsmotor des Motorantriebes in erster Näherung konstant bleibt. Nur der Motorstrom ändert sich im Verlauf der Umschaltung; die jeweils sich ändernde Wirkleistung resultiert also aus dem sich ändernden Strom am Antriebsmotor.

Die Spannung am Antriebsmotor kann sich bei jeder Umschaltung gegenüber der Spannung bei der vorhergehenden Umschaltung ändern, während der Umschaltung selbst bleibt sie aber - wie dargestellt - zunächst konstant.

Zunächst wird ein Kennlinienfeld aufgenommen und daraus eine Funktion des Motordrehmomentes Md = f(Pw, U, f) abgeleitet, die das unterschiedliche Verhalten des Antriebsmotors abbildet. Diese Funktion Md = f(Pw, U, f) enthält drei spannungsabhängige Parameter q, m, n, die der spezifischen Motorkennlinie entsprechen und die in kleinen Spannungsschritten zunächst nicht flüchtig in einer Tabelle gespeichert werden. Diese Parameter sind also zunächst abhängig von Art, Bauweise und Dimensionierung des entsprechenden Antriebsmotors und weiterhin abhängig von der sich zu Beginn einer Umschaltung einstellenden Spannung am Antriebsmotor.

Zu Beginn jeder Lastumschaltung wird die Motorspannung am Antriebsmotor gemessen. Aus dieser Motorspannung werden dann die jeweiligen Werte für die spannungsabhängigen Parameter q, m, n während dieser Umschaltung aus der nicht flüchtig gespeicherten Wertetabelle ausgelesen. Besonders vorteilhaft ist es, in dieser Wertetabelle die genannten Faktoren in 1-Volt-Schritten der sich verändernden Spannung zu speichern.

Danach erfolgt eine Ermittlung der jeweiligen konkreten Drehmomentwerte Md zu den einzelnen Zeitpunkten während der Umschaltung nach der Beziehung

$$Md = q \cdot Pw^2 + m \cdot Pw + n$$

Für die Ermittlung der einzelnen Drehmomentwerte werden während einer Lastumschaltung also stets dieselben, unveränderten Werte für die Parameter q, m, n verwendet, die sich aus der nicht flüchtig gespeicherten Wertetabelle und der gemessenen Spannung am Antriebsmotor zu Beginn jeder Lastumschaltung ergeben.

Bei der nachfolgenden nächsten Lastumschaltung kann die zu deren Beginn gemessene Motorspannung eine andere sein - folgerichtig ändern sich dann auch die Faktoren q, m, n.

Eine Ausführungsform der Erfindung soll nachfolgend, eingebettet in das vollständige Verfahren zur Überwachung eines Stufenschalters, näher erläutert werden.

Die einzige

FIG.    zeigt in schematischer Darstellung den Ablauf einer bevorzugten Ausführungsform eines Verfahrens zur Überwachung eines Stufenschalters.

Seitlich sind die wichtigsten Verfahrensschritte nummeriert, die nachfolgend näher erläutert werden.

Zur Ertüchtigung des entsprechenden Monitoringsystems, in dem die bevorzugte Ausführungsform des Verfahren durchgeführt werden soll, werden zunächst nicht flüchtig entsprechende Werte q, m, n bei verschiedenen Spannungen am Antriebsmotor in einer Matrix gespeichert. Diese Werte werden, wie erläutert, aus der Motorkennlinie abgeleitet und hängen von Art, Bauweise und Dimensionierung des entsprechenden Antriebsmotors ab. Beispielsweise können sich für einen Drehstrom-Asynchronmotor folgende Werte ergeben, die hier nur beispielhaft und auszugsweise aufgeführt sind:

| Spannung in Volt | q | m | n |
|---|---|---|---|
| 428 | -8,2 | 17,1 | -0,5 |
| 429 | -8,2 | 17,1 | -0,5 |
| 430 | -8,1 | 17,1 | -0,5 |
| 431 | -8,1 | 17,1 | -0,5 |
| 432 | -8,0 | 17,1 | -0,5 |
| ....... | | | |
| 459 | -7,0 | 17,0 | -0,5 |
| 460 | -7,0 | 17,0 | -0,5 |

(fortgesetzt)

| Spannung in Volt | q | m | n |
|---|---|---|---|
| 461 | -7,0 | 17,0 | -0,5 |
| 462 | -6,9 | 17,0 | -0,5 |
| ....... | | | |
| 608 | -3,0 | 16,6 | -0,9 |
| 609 | -3,0 | 16,6 | -0,9 |
| usw. | | | |

Diese vorab erfolgende nicht flüchtige Speicherung spezifischer spannungsabhängiger Wertepaare in einer Wertematrix ist mit dem Verfahrensschritt 0 bezeichnet, da sie einmalig vor Beginn des eigentlichen Verfahrens vorgenommen wird.

Zu Beginn des eigentlichen Verfahrens erfolgt in einem Verfahrensschritt 1 die Betätigung des Stufenschalters und damit der Beginn der Lastumschaltung zwischen zwei Wicklungsanzapfungen des Stufentransformators.

Im nachfolgenden Verfahrensschritt 2 erfolgt die Messung der Spannung U am Antriebsmotor des Motorantriebes.

Im nächsten Verfahrensschritt 3 erfolgt das Auslesen der korrespondierenden Parameter q, m, n für die jeweilige gemessene Spannung U.

Im nächsten Verfahrensschritt 4 erfolgt in kurzen zeitlichen Abständen die Messung des Stromes I am Antriebsmotor sowie von $\cos\varphi$.

Der nächste Verfahrensschritt 5 beinhaltet die Ermittlung der Wirkleistung nach der Beziehung

$$Pw = U \cdot I \cdot \cos\varphi.$$

Bis hierhin ist das Verfahren - abgesehen vom Verfahrensschritt 3 - im Wesentlichen bekannt.

Im nächsten Verfahrensschritt 6 erfolgt die Ermittlung des Drehmomentes Md nach der Beziehung

$$Md = q \cdot Pw^2 + m \cdot Pw + n$$

Im wiederum nachfolgenden Verfahrensschritt 7 erfolgt auf an sich bekannte Weise ein Soll-/Ist-Vergleich im jeweiligen Fenster und ggf. die Generierung eines Warnsignals oder der Abschaltung des Stufentransformators.

Nachfolgend im abschließenden Verfahrensschritt 8 ist das Ende der Betätigung des Stufenschalters erreicht, dieser hat seine neue stationäre Position eingenommen.

Bei jeder erneuten Betätigung des Stufenschalters werden die erläuterten Verfahrensschritte 1...8 erneut durchlaufen. Gemäß der bevorzugten Ausführungsform des Verfahrens erfolgt wiederum zu Beginn der Umschaltung die Messung der Spannung U am Antriebsmotor, die von der gemessenen Spannung U bei der vorigen Betätigung abweichen kann, so dass sich andere Werte für q, m, n ergeben können, die dann im Verfahrensschritt 6 in die Ermittlung des Drehmomentes Md einfließen. Die bevorzugte Ausführungsform des Verfahrens berücksichtigt also die treibende Motorspannung des Antriebsmotors und ermöglicht sehr genaue Ergebnisse, da das unterschiedliche Verhalten des Antriebsmotors bei den einzelnen treibenden Spannungen durch die sich dabei ändernden Faktoren q, m, n erfasst und kompensiert wird.

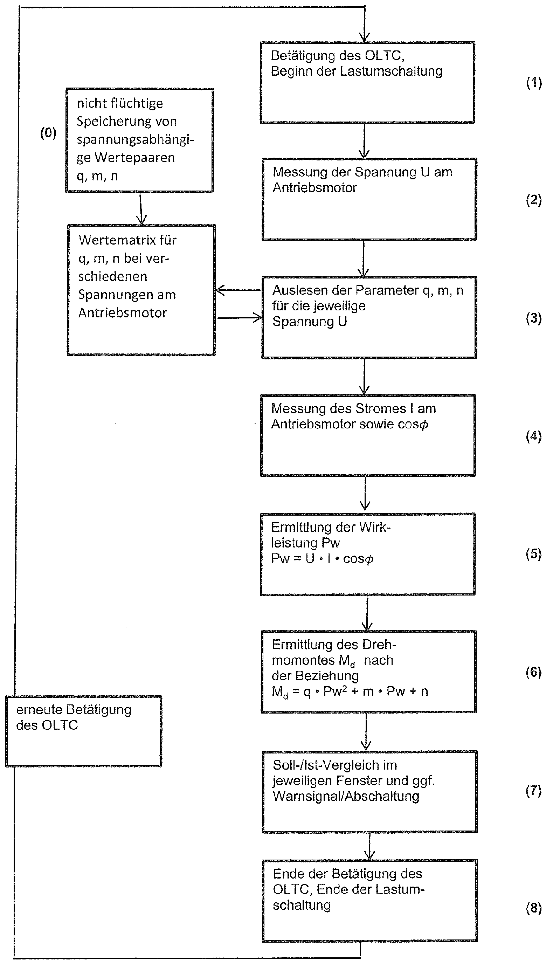

**Patentansprüche**

1. Verfahren zur Überwachung eines Stufenschalters, wobei

    - während dessen Betätigung, d. h. während des Umschaltvorganges, Strom I, Spannung U und Phasenwinkel $\cos\varphi$ an einem elektrischen Antriebsmotor eines zur Betätigung des Stufenschalters vorgesehenen Motorantriebes gemessen werden (4),
    - aus diesen gemessenen Werten die aktuell vom Antriebsmotor aufgenommene Wirkleistung nach der Beziehung $Pw = U \cdot I \cdot \cos\varphi$ ermittelt wird (5),
    - aus dieser Wirkleistung Pw das am Antriebsmotor wirksame Drehmoment Md ermittelt wird (6),
    - vor dem Beginn der erstmaligen Betätigung des Stufenschalters für den jeweiligen Antriebsmotor spezifische Faktoren q, m, n als Wertepaare nicht flüchtig als Matrix gespeichert werden (0),
    - zu Beginn der Betätigung des Stufenschalters (1) die aktuelle Spannung U am Antriebsmotor gemessen wird (2),
    - aus der gespeicherten Matrix die zugeordneten Wertepaare q, m, n ausgelesen werden (3),
    - nach der Ermittlung (5) der Wirkleistung Pw das jeweilige Motordrehmoment Md ermittelt wird (6),

    **dadurch gekennzeichnet, dass**

    - die Faktoren q, m, n abhängig von der Spannung U am Antriebsmotor sind;
    - das Speichern (0) derart erfolgt, dass die Faktoren q, m, n als Wertepaare für unterschiedliche Spannungen U nicht flüchtig als Matrix gespeichert werden;
    - das Auslesen (3) derart erfolgt, dass aus der gespeicherten Matrix die dieser gemessenen Spannung U zugeordneten Wertepaare q, m, n ausgelesen werden,
    - die Ermittlung (6) des jeweiligen Motordrehmoments Md nach der Beziehung

$$Md = q \cdot Pw^2 + m \cdot Pw + n$$

erfolgt.

2. Verfahren nach Anspruch 1, wobei

    - die Wertepaare q, m, n für verschiedene Spannungen U im 1-Volt-Raster als Matrix gespeichert werden.

3. Verfahren nach Anspruch 1 oder 2, wobei

    - der Wert q im Bereich von minus 10,0... minus 1,0, der Wert m im Bereich von 20,0...15,0 und der Wert n im Bereich von minus 0,1... minus 2,0 liegen.

**Claims**

1. Method of monitoring a tap changer, wherein

    - during actuation thereof, i.e. during the switching-over process, current I, voltage U and phase angle $\cos\varphi$ are measured (4) at an electric drive motor of a motor drive provided for actuation of the tap changer,
    - the instantaneous effective power taken up the drive motor is determined (5) from these measured values in accordance with the equation $Pw = U \cdot I \cdot \cos\varphi$,
    - the torque Md effective at the drive motor is determined (6) from this effective power Pw,
    - prior to the start of the first actuation of the tap changer, factors q, m, n specific to the respective drive motor are stored (0) as value pairs in non-volatile form as a matrix,
    - at the start of actuation of the tap changer (1) the instantaneous voltage U at the drive motor is measured (2),
    - the associated value pairs q, m, n are read out (3) from the stored matrix and
    - after determination (5) of the effective power Pw the respective motor torque Md is determined (6),

    **characterised in that**

    - the factors q, m, n are dependent on the voltage U at the drive motor;
    - the storage (0) is carried out in such a way that the factors q, m, n are stored as value pairs for different voltages U in non-volatile form as a matrix;

- the reading out (3) is carried out in such a way that the value pairs q, m, n associated with this measured voltage U are read out of the stored matrix; and
- the determination (6) of the respective motor torque Md is carried out in accordance with the equation

$$Md = q \bullet Pw^2 + m \bullet Pw + n.$$

2.  Method according to claim 1, wherein

- the value pairs q, m, n for different voltages U are stored as a matrix in a 1 volt grid.

3.  Method according to claim 1 or 2, wherein

- the value q lies in the range of minus 10.0 ... minus 1.0, the value m lies in the range of 20.0 ... 15.0 and the value n lies in the range of minus 0.1 ... minus 2.0.

**Revendications**

1.  Procédé de surveillance d'un commutateur à gradins selon lequel :

- pendant son actionnement, c'est-à-dire pendant le processus de commutation de celui-ci, l'intensité du courant I, la tension U et l'angle de phase cos φ d'un moteur d'entraînement électrique d'un entraînement motorisé prévu pour actionner ce commutateur à gradins sont mesurés (4),
- à partir des valeurs ainsi mesurées, la puissance active actuelle absorbée par le moteur d'entraînement est déterminée par la relation Pw = U • I • cos φ (5),
- à partir de cette puissance efficace Pw le couple Md actif sur le moteur d'entraînement est déterminé (6),
- avant le début du premier actionnement du commutateur à gradins, des facteurs q, m, n spécifiques pour le moteur d'entraînement respectif sont enregistrés (O) sous la forme d'une matrice de manière non volatile en tant que paires de valeurs,
- au début de l'actionnement du commutateur à gradins (1) la tension actuelle U du moteur d'entraînement est mesurée (2),
- les paires de valeurs q, m, n associées sont extraites de la matrice enregistrée (3),
- après la détermination (5) de la puissance active Pw le couple respectif Md du moteur est déterminé (6),

**caractérisé en ce que**

- les facteurs q, m, n sont dépendants de la tension U du moteur d'entraînement,
- l'enregistrement (O) est effectué de sorte que les facteurs q, m, n soient enregistrés sous la forme d'une matrice de manière non volatile en tant que paires de valeurs pour différentes tensions U,
- l'extraction (3) est effectuée de sorte que, les paires de valeurs q, m, n associées à cette tension mesurée U soient extraites de la matrice enregistrée,
- la détermination (6) du couple Md respectif du moteur est effectuée conformément à l'équation

$$Md \quad q \bullet Pw^2 + m + Pw + n$$

2.  Procédé conforme à la revendication 1, selon lequel les paires de valeurs q, m, n pour différentes tensions U sont enregistrées sous la forme d'une matrice dans une grille de 1 volt.

3.  Procédé conforme à la revendication 1 ou 2, selon lequel la valeur q est située dans la plage de moins 10,0 à moins 1,0, la valeur m est située dans la plage de 20,0 à 15,0 et la valeur n est située dans la plage de moins 0,1 à moins 2,0.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19744465 C1
- DE 19746574 C1
- DE 19907834 C1
- DE 102005012052 A1
- DE 102009051923 A1